# EUROPÄISCHE PATENTANMELDUNG

(11) **EP 0 824 204 A1**
(43) Veröffentlichungstag der Anmeldung: **18.02.1998**
(21) Anmeldenummer: 97113414.3
(22) Anmeldetag: 04.08.1997
(51) Int. Cl.: F16L 9/19, F17D 5/06

(54) **Rohrleitungssystem, insbesondere für die Übertragung von Fernwärme**

(30) Priorität: 15.08.1996 DE 19632991
(71) Anmelder: Brandes, Bernd, 24329 Grebin (DE)
(72) Erfinder: Brandes, Bernd, 24329 Grebin (DE)
(74) Vertreter: Einsel, Robert, Dipl.-Ing.

(57) **Zusammenfassung**

Bei einem Rohrleitungssystem mit einem geschlossenen Wärmekreislauf für ein Medium mit einer das Medium führenden Hinleitung, einer Rückleitung für das Medium und Wärmedämmung sowie Außenrohrschutz (4)für die beiden Leitungen, insbesondere für die Übertragung von Fernwärme, weisen die Hinleitung (1, 3) oder die Rückleitung (3, 1) einen Innendurchmesser auf, der größer ist als der Außendurchmesser der jeweils anderen Leitung und die Leitung (1) kleineren Durchmessers ist innerhalb des Strömungsweges der Leitung (3) größeren Durchmessers angeordnet. Die jeweils äußere Leitung (3) ist vom Außenrohrschutz (4) mit Abstand umgeben und im Zwischenraum zwischen Außenrohrschutz (4) und äußerem Rohr (3) ist eine Wärmedämmung (5) vorgesehen. Die Wandung des Innenrohres (1) ist wärmedämmemd ausgebildet .

## Beschreibung

Rohrleitungssysteme sind bekannt (GB1455415, DE 32 32 211 C3). Sie enthalten in einem geschlossenen Kreislauf für ein die Wärme übertragendes flüssiges oder dampfförmiges Medium eine Hinleitung und eine Rückleitung, die paarweise zusammengefaßt oder nebeneinander oder übereinander angeordnet sind. Jede dieser Hin- und Rück-Leitungen weist ein Innenrohr, ein das Innenrohr mit Abstand umgebendes Außenrohr sowie Füllmaterial im Raum zwischen den beiden Rohren zur Wärmedämmung auf. Durch das jeweilige Innenrohr einer solchen Rohrleitung fließt das Fernwärmemedium. Das Füllmaterial besteht beispielsweise aus Polyurethan.

Undichte Stellen in solchen Rohrleitungssystemen können Energieverluste, aber auch weitreichende Schäden verursachen. Es ist daher üblich, in solchen Rohrleitungssystemen sowohl die Hinleitung als auch die Rückleitung ständig zu überwachen. Zur Detektion und Ortung von Undichtigkeiten am jeweiligen Innenrohr ist es bekannt, Sensorelemente direkt in den Zwischenraum zwischen Innenrohr und Außenrohr, also in die Wärmedämmung einzubringen. Solche Sensoren sind auf die jeweils verwendete Meßtechnik abgestimmt.

Rohrleitungssysteme mit koaxial angeordneten Rohrleitungen sind zwar bekannt (EP 0206825 A2 und US 2475635), doch sollen diese bekannten Rohrleitungen weder in ein Erdreich eingebettet und dort nach außen geschützt werden noch werden die beiden koaxialen Leitungen gegeneinander wärmeisoliert.

Die Kosten solcher Rohrleitungen für die Übertragung von Fernwärme und der dafür erforderlichen Überwachungseinrichtungen sind relativ hoch, verglichen mit denen bei anderen Energieträgern wie Gas, Öl und Strom. Fernwärme-Systeme mit zentraler Wärmeerzeugung und mit Übertragung der Wärme mittels flüssiger oder dampfförmiger Medien konnten sich daher trotz vieler Vorzüge noch nicht durchsetzen.

Der Erfindung liegt die Aufgabe zugrunde, Fernwärmesysteme zu schaffen, die hinsichtlich Preis und Sicherheit ihrer Rohrleitungen günstigere Bedingungen aufweisen als die bisher bekannten Rohrleitungen und Anlagen. Diese Aufgabe wird gelöst durch ein Rohrleitungssystem mit den im Anspruch 1 aufgeführten Merkmalen.

Weiterbildungen der Erfindung sind in den Unteransprüchen definiert.

Der Erfindung liegt die Erkenntnis zugrunde, daß die Kosten der Rohrleitungen selbst mehr und mehr vernachlässigbar werden gegenüber den Kosten für die Verlegung der Leitungen, insbesondere gegenüber den Tiefbaukosten. Durch die Erfindung wird erreicht, daß sowohl die Kosten für die Rohrleitungen als auch die Tiefbaukosten herabgesetzt werden.

Im Prinzip besteht die Erfindung darin, daß Hinleitung und Rückleitung einen geschlossenen Kreislauf für das Wärmemedium bilden, daß Hinleitung oder Rückleitung einen Innendurchmesser aufweisen, der größer ist als der Außendurchmesser der jeweils anderen Leitung und daß die Leitung kleineren Durchmessers innerhalb des Strömungsweges der Leitung größeren Durchmessers angeordnet ist, mit einer Wandung, die im wesentlichen wärmedämmend ausgebildet ist.

Wegen des geschlossenen Kreislaufes bei der erfindungsgemäßen Rohrleitung wirkt im Betriebszustand auf die Wandung des Innenrohres praktisch kein nennenswerter Druck. Die Wandung könnte also relativ schwach ausgebildet werden. Es ist aber sinnvoll, diese Wandung so zu bemessen, daß sie auch im Falle der Undichtigkeit der außenliegenden Leitung dem Druck des Hinlauf-Mediums allein standhält.

Bei einem bevorzugten Ausführungsbeispiel weist die Hinleitung ein relativ dickwandiges Kunststoffrohr auf, das vom Medium der Rückleitung umströmt wird. Die Dicke dieses Kunststoffrohres erhöht nicht nur die Stabilität gegen Undichtigkeiten der außenliegenden Leitung sondern vermindert auch einen Wärmeaustausch zwischen Hin- und Rückleitung. Der Außendurchmesser einer Rohrleitung mit einem inneren Hinlaufrohr aus Kunststoff und einem äußeren Rücklaufrohr üblicher Konstruktion ist trotz der dickeren Wandung dieses Innenrohres nicht wesentlich größer als der Außendurchmesser einer üblichen Hinlauf- oder Rücklauf- Leitung mit Innenrohr für die Übertragung des Mediums, Außenrohr für den Schutz des Innenrohres und Wärmedämmung zwischen den beiden Rohren. Bei der Erfindung ist nur das außenliegende, das Kunststoffrohr umgebende Rohr in üblicher Weise innerhalb eines schützenden und wärmegedämmten weiteren Außenrohres angeordnet. Der Strömungsquerschnitt für das Rücklaufmedium erfordert eine nur relativ geringe Radiusvergrößerung für den Innendurchmesser des außenliegenden Rohres. Da das rückströmende Medium immer noch eine Temperatur aufweist, die höher ist als die des die Leitungen aufnehmenden Erdreiches, reicht die dickere Wandung des inneren Kunststoffrohres aus, eine Abkühlung des Hinlaufmediums durch das Rücklaufmedium zu vermeiden. Ein Einfluß der Temperatur des Erdreichs auf die innenliegende Leitung ist vernachlässigbar. Wärmeverluste des Hinlaufrohres durch die Wandung des Kunststoffrohres sind relativ gering, stellen aber praktisch keine Energieverluste des Gesamtkreislaufes dar, da durch die koaxiale Anordnung des innenliegenden Rohres solche Wärmeverluste des Hinlaufs lediglich als Wärmegewinn für den Rücklauf wirken, der sich wegen des geschlossenen Kreislaufs in der Zentrale als eine relative Energieeinsparung auswirkt, nicht aber ins Erdreich übertragen wird.

Das innenliegende Rohr ist durch seine dickere Wandung nicht nur wärmedämmend sondern auch nahezu bruchsicher. Es ist außerdem durch das den Rücklauf bildende Außenrohr gegen äußere Einflüsse geschützt, das selbst durch seine Wärmedämmung und das äußere Rohr geschützt ist. Für die meisten Anwendungsfälle dürfte daher ein Sensor in der Wärmedämmung der außen liegenden Leitung zur Ermittlung von Undichtigkeiten ausreichen. Der Außendurchmesser der außenliegenden Leitung ist nur unwesentlich größer als der Außendurchmesser üblicher Leitungen. Die Tiefbaukosten entsprechen daher praktisch nur den Kosten für die Verlegung einer einzelnen Leitung. Reparaturkosten werden praktisch halbiert. Sollte wider Erwarten das innere Kunststoffrohr undicht werden, so muß nicht die gesamte Leitung ausgegraben werden. Das Kunststoffrohr kann von einer Teststelle aus in das außenliegende Rohr eingeführt werden, zweckmäßigerweise von einer größeren Länge aufweisenden Vorratsrolle abgenommen werden. Insbesondere bei geringeren Nennweiten der Leitungsstrecke werden für das innenliegende Rohr größere Längen in einem Stück verwendet. Das innenliegende Rohr wird vorzugsweise für die Hinleitung verwendet, wodurch die höhere Temperaturdifferenz zum Erdreich im Innenrohr liegt, die Rückleitung daher die Hinleitung gegen das Erdreich wärmemäßig entkoppelt.

Statt eines Kunststoffrohres kann auch ein Metallrohr verwendet und wärmedämmend isoliert werden. Es ist weiterhin möglich, für die innenliegende Leitung ein glattes Rohr mit einem Wellrohr zu kombinieren und durch die zwischen beiden Rohrteilen liegenden Zwischenräume die Wärmedämmung zu erhöhen.

Zur näheren Erläuterung der Erfindung wird im folgenden ein Ausführungsbeispiel anhand der Zeichnungen beschrieben. Diese zeigen in
- Fig. 1: den Querschnitt einer Fernwärmeleitung mit Hin- und Rückleitung, bei der ein dickwandiges Kunststoff- Innenrohr von einem äußeren Rohr mit Außenrohr, Wärmedämmung und Sensor umschlossen wird,
- Fig. 2: eine Anordnung mit vorgefertigten Leitungen und Verbundstellen,
- Fig. 3: ein doppeltes Innenrohr mit erhöhter Wärmedämmung
- Fig. 4: eine Einrichtung zur Einführung des Kunststoff- Innenrohres in bereits fertigverlegte Außenrohre.
- Fig. 5: eine an das Außenrohr angeflanschte Austrittsöffnung für das Innenrohr.
- Fig. 6: eine Abwandlung der Fig. 5.

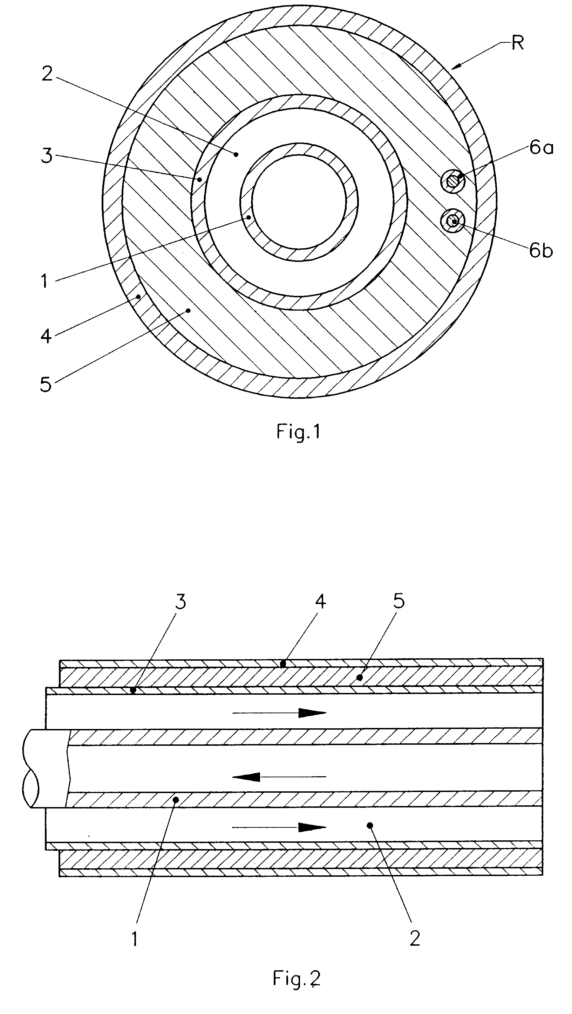

In Fig. 1 ist ein Rohrleitungssystem mit dem Querschnitt einer Fernwärmeleitung R dargestellt, die ein Innenrohr 1 zur Übertragung eines Mediums und ein das Innenrohr 1 unter Bildung eines der Rückleitung des Mediums dienenden Zwischenraums 2 umschließendes äußeres Rohr 3 aufweist. Das Innenrohr 1 ist ein Kunststoffrohr, insbesondere ein vernetztes Polyamid, PEX oder GFK, dessen Wandung zur Wärmedämmung seines Innenraums gegenüber dem Zwischenraum 2 entsprechend verdickt ausgebildet ist. Da die Wandung des inneren Rohres 1 zwei das Medium führende Räume etwa gleichen Drucks trennt, werden von der Wandung keine sehr hohen Festigkeitswerte verlangt. Das äußere Rohr 3 ist von einem Außenrohr 4 umgeben, dessen Außenseite ggf. zusätzlich armiert ist. Der Zwischenraum zwischen dem äußeren Rohr 3 und dem Außenrohr 4 ist mit einem bei der Einfüllung möglichst trockenen Dämm-Material 5, z.B. einem Polyurethan (PU), gefüllt. Ein Sensor 6 ist im Dämm-Material 5 angeordnet und dient der Feststellung und Messung von evtl. Undichtigkeiten nach dem Prinzip der Laufzeitmessung und/oder Widerstandsmessung.

Die Wandung des Innenrohres 1 wird im wesentlichen nur für die Temperaturspreizung zwischen Hinlauf und Rücklauf kalkuliert und nicht - wie bisher - zwischen Hinlauf und Außentemperatur z.B. des Erdreichs. Energie- oder Temperaturverluste sind nicht mehr absolut zu betrachten sondern relativ. Die Energie geht nicht für die Nutzung verloren sondern wird im Medium des Rücklaufs gebunden. Für den Hinlauf wirken daher alle Isolationen additiv gegenüber dem Erdreich. Die Temperaturdifferenz des Rücklaufs bei einem beispielsweise um den Faktor 1,33 erhöhten Umfang des äußeren Rohres 3 verbleibt als kleiner Rest gegenüber dem Erdreich. Bei 90°/60°C Hinlauf/Rücklauftemperatur und 20° Erdtemperatur ist das eine Einsparung von etwa 50% der Wärmeverluste im Erdreich. Dadurch werden dünnere und umweltfreundlichere Wärmedämmungen einsetzbar.

Selbst ein kleines Leck in der Wandung des Innenrohres 1 würde nur wie ein kleiner Verbraucher im Kreislauf wirken und weder einen realen Wasserverlust noch eine Gefährdung der Versorgungssicherheit darstellen.Alle diese Vorteile erweitern die Materialauswahl für das System erheblich. Zugleich wird die Zahl der kostenaufwendigen und arbeitsintensiven Muffenverbindungen reduziert. Das wiederum reduziert das Ausfallrisiko und die Zeit eines offenen Grabens für die Rohrleitung. Im Reparaturfall kann das mit Spiel im äußeren Rohr 3 liegende Innenrohr leicht ausgewechselt werden. Wenn das Außenrohr selbst unbeschädigt ist, muß also das Außenrohrsystem nicht ausgegraben werden.

Die äußeren Dehnungskräfte werden auf den außenströmenden Rücklauf begrenzt und erlauben eine günstigere Leitungsführung im Gelände. Die inneren Dehnungskräfte des Hinlaufs können bei flexiblen Rohren durch Schlängeln oder, falls bei starren Rohren nötig, durch etwas größere Nennweiten des Rücklaufs in Bogenbereichen aufgefangen werden. Dadurch wird eine Berechnung der Statik als Folge von temperaturbedingten Längenänderungen wesentlich einfacher als bei getrennten Hinlauf- und Rücklaufleitungen. Das Transportvolumen zur Baustelle wird fast halbiert, verglichen mit den bisher üblichen getrennten Rohren für Hin- und Rücklauf.

Fig. 2 zeigt eine vorgefertigte Leitungslänge für eine Leitung nach Fig. 1. In diesem Beispiel sind Innenrohr 1, Außenrohr 4 sowie die Wärmedämmung 5 und das äußere Rohr 3 als Einheit vorgefertigt.

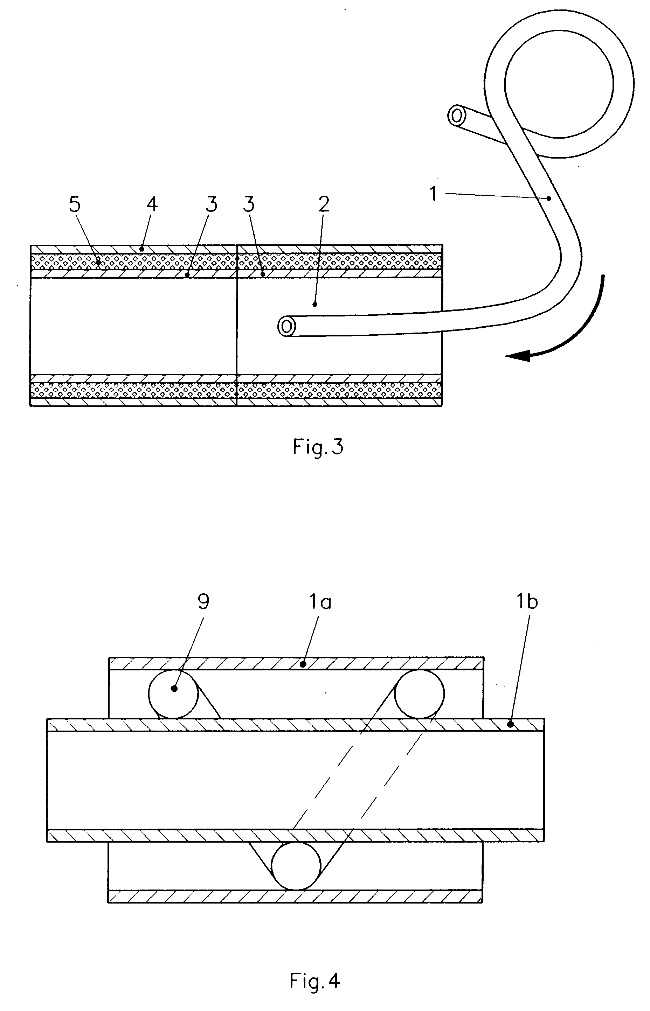

In Fig. 3 ist eine bereits installierte äußere Leitung mit mehreren miteinander verbundenen äußeren Rohren 3 fester Längen gezeigt, in die das Innenrohr 1 von einer Vorratsrolle aus eingeführt wird. Das Innenrohr 1 hat daher eine größere Länge als die einzelnen Außenrohre 3 der Rohrleitung. Das Innenrohr 1 kann gemäß Fig. 3 koaxial im Außenrohr 3 angeordnet sein. Wegen der bereits durch das Material der Wandung des Innenrohres 1 guten Wärmedämmung zwischen den beiden Strömungen in den Leitungen 1 und 3 ist die genaue Lage der Innenleitung im äußeren Rohr 3 von geringerer Bedeutung. Es kann daher vorteilhaft sein, das Innenrohr 1 dezentral in das äußere Rohr 3 einzuführen. Im Betrieb kann eine Anlage des Innenrohres 1 an der Innenwandung des äußeren Rohres 3 vorteilhaft sein. Einerseits kann eine solche Anlage an einer Wandung die Stabilität erhöhen, andrerseits dürfte keine merkbare Erhöhung eines Wärmeüberganges der Gesamtanordnung 1,3 zu erwarten sein. Eine Einführung von Abstandhaltern zwischen Innenrohr 1 und dem äußeren Rohr 3 ist dann nicht erforderlich.

In Fig. 4 ist ein Beispiel für eine Innenleitung 1 mit doppelter Wandung 1a und 1b dargestellt, zwischen denen Abstandsmaterial 9, beispielsweise ein Band, Draht, Schnur oder dergleichen vorgesehen ist. Der Zwischenraum zwischen den Wandungen kann mit Luft, Schaum oder Gas gefüllt sein oder ein Vakuum aufweisen.Durch diese Doppelwandigkeit wird die Wärmedämmung erhöht. In den Zwischenraum zwischen den Wandungen 1a, 1b können Drähte, Sensoren oder dergleichen zur überwachung eingefügt werden. Es ist aber auch möglich, diesen Zwischenraum mittels Unter- oder Überdruck zur Überwachung heranzuziehen.

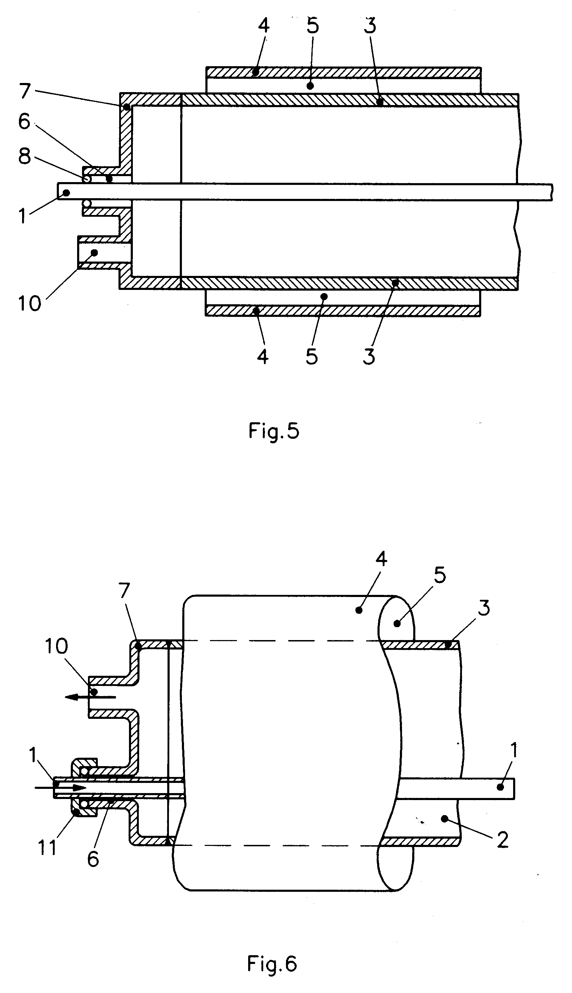

In Fig. 5 ist die jeweils innere Leitung 1 durch eine Öffnung 6 in einem an das Außenrohr 3 angeflanschten Abschlußstück 7 geführt und durch diese Öffnung 6 auch wieder entnehmbar. Die Öffnung 6 ist zu diesem Zweck gegen die innere Leitung 1 mittels einer Dichtung 8 abgedichtet. In vielen Fällen dürfte bereits eine O-Ring-Dichtung genügen. Bei höheren Drücken kann beispielsweise eine Schneidringdichtung eingesetzt werden.

Fig. 6 zeigt eine Muffe 7 als Endstück einer Rohrleitung mit Außenrohr 4, äußerem Rohr 3 und Innenrohr 1, bei dem das äußere Rohr 4 durch die Muffe 7 abgeschlossen ist, beispielsweise durch Flanschverbindung oder Schweißverbindung. Diese Muffe 7 ist mit einer Öffnung 10 für die Entnahme des Rücklaufmediums versehen und mit der Öffnung 6, durch die das Innenrohr 1 eingeführt wird oder entnehmbar ist. Eine Dichtung 8 und ein Abschlußring 11 gewährleisten einen sicheren und dichten Veschluß der Öffnung 6 bei durchgeführtem Innenrohr 1.

## Patentansprüche

1. Rohrleitungssystem mit einem geschlossenen Wärmekreislauf für ein Medium mit einer das Medium führenden Hinleitung, einer Rückleitung für das Medium und Wärmedämmung sowie Außenrohrschutz (4)für die beiden Leitungen, insbesondere für die Übertragung von Fernwärme, **dadurch gekennzeichnet, daß** die Hinleitung (1, 3) oder die Rückleitung (3, 1) einen Innendurchmesser aufweisen, der größer ist als der Außendurchmesser der jeweils anderen Leitung und daß die Leitung (1) kleineren Durchmessers innerhalb des Strömungsweges der Leitung (3) größeren Durchmessers angeordnet ist, daß die jeweils äußere Leitung (3) vom Außenrohr (4) mit Abstand umgeben ist, daß im Zwischenraum zwischen Außenrohr (4) und äußerem Rohr (3) eine Wärmedämmung (5) vorgesehen ist und daß die Wandung des Innenrohres wärmedämmemd ausgebildet ist.

2. Rohrleitungssystem nach Anspruch 1, **dadurch gekennzeichnet, daß** die Wandung der jeweils inneren Leitung (1) zur Wärmedämmung Kunststoff enthält.

3. Rohrleitungssystem nach Anspruch 2, **dadurch gekennzeichnet, daß** die Wandung der jeweils inneren Leitung (1) zur Wärmedämmung dicker ausgebildet ist, als es aus Festigkeitsgründen notwendig ist.

4. Rohrleitungssystem nach Anspruch 1, 2 oder 3, **dadurch gekennzeichnet, daß** die jeweils innere Leitung (1,3) koaxial zur jeweils äußeren Leitung (3,1) angeordnet ist.

5. Rohrleitungssystem nach Anspruch 1, 2 oder 3, **dadurch gekennzeichnet, daß** die jeweils innere Leitung (1,3) dezentral zur jeweils äußeren Leitung (3,1) angeordnet ist.

6. Rohrleitungssystem nach einem der Ansprüche 1 - 5, **dadurch gekennzeichnet, daß** die innere Leitung (1) aus einem vernetzten Polyamid besteht.

7. Rohrleitungssystem nach einem der Ansprüche 1 - 6, **dadurch gekennzeichnet, daß** die jeweils innere Leitung (1) das Hinlaufmedium führt.

8. Rohrleitungssystem nach einem der Ansprüche 1 - 7, **dadurch gekennzeichnet, daß** die Wandung der inneren Leitung (1) ein GFK-Rohr ist.

9. Rohrleitungssystem nach einem der Ansprüche 1 - 7, **dadurch gekennzeichnet, daß** die Wandung der inneren Leitung (1) ein PEX- Rohr ist.

10. Rohrleitungssystem nach einem der Ansprüche 1 - 7, **dadurch gekennzeichnet, daß** die Wandung der inneren Leitung (1) ein mehrschichtiger Kunststoff mit Isolier-Zwischenschicht durch Dämmstoff oder Abstandshaltung ist.

11. Rohrleitungssystem nach einem der Ansprüche 1 - 10, **dadurch gekennzeichnet, daß** die Wandung der inneren Leitung (1) ein mehrschichtiges metallisches Rohr mit wärmeisolierender Zwischenschicht ist.

12. Rohrleitungssystem nach einem der Ansprüche 10 - 11, **dadurch gekennzeichnet, daß** im Zwischenraum zwischen den Wandungen der inneren Leitung (1) ein oder mehrer Leitungen zu Überwachungszwecken vorgesehen sind.

13. Rohrleitungssystem nach einem der Ansprüche 10 - 11, **dadurch gekennzeichnet, daß** der Zwischenraum zwischen den Wandungen der inneren Leitung (1) druckdicht ausgebildet und mittels Unter- oder Überdruck überwachbar ist.

14. Rohrleitungssystem nach einem der Ansprüche 1 - 11, **dadurch gekennzeichnet, daß** die jeweils innere Leitung (1) durch eine angeflanschte Austrittsöffnung geführt und entnehmbar ist.
